# EUROPEAN PATENT APPLICATION

(11) **EP 4 001 774 A1**
(43) Date of publication of application: **25.05.2022**
(21) Application number: 20206874.8
(22) Date of filing: 11.11.2020
(51) Int. Cl.: F24C 15/20, F24C 7/08, F24C 15/10, A47J 36/00, G01K 11/26

(54) **SYSTEM FOR RECORDING A PHYSICAL PROPERTY AND COOKER HOOD**

(71) Applicant: ELECTROLUX APPLIANCES AKTIEBOLAG, 105 45 Stockholm (SE)
(72) Inventor: KRAUßE, Constantin, 91541 Rothenburg o. d. Tauber (DE); MAZZON, Claudio, 91541 Rothenburg (DE)

(57) **Abstract**

A system for recording a physical property of an item to be cooked or of a cooking process auxiliary means during a cooking process performed by a cooking appliance (10) comprises
- a sensor means (20) for sensing the physical property of the item to be cooked or of the cooking process auxiliary means,
- a first transmission means for wirelessly transmitting a status signal freely through space, which status signal corresponds to the physical property of the item to be cooked or of the cooking process auxiliary means, wherein the first transmission means is connected to the sensor means (20),
- a first receiving means (22) for receiving the status signal transmitted by the first transmission means, the first receiving means (22) being arranged in a separate unit (12), which is independent from the cooking appliance (10),
- a second transmission means (24) electrically connected to the first receiving means (22), the second transmission means (24) being configured to forward the status signal transmitted by the first transmission means or to transmit a processed signal generated by processing the status signal, wherein the second transmission means (24) is arranged in or at the separate unit (12), and
- a second receiving means (28, 30) for receiving the processed signal or the status signal transmitted by the second transmission means (24), the second receiving means (28, 30) being arranged in or at the cooking appliance (10) and electrically connected to a control unit of the cooking appliance (10).

## Description

The present invention relates to a system for recording a physical property of an item to be cooked or of a cooking process auxiliary means according to claim 1. The present invention further relates to a cooker hood for extracting cooking vapours from a cooking area according to claim 10.

Sensor probes are used in combination with household appliances, specifically in the preparation of food products, to determine various parameters that are relevant to the treatment process, specifically to the food preparation process. One example of such sensor probes are thermometers for measuring the temperature of the contents of a cooking utensil, such as the temperature of a liquid within a cooking pot or the core temperature of a piece of meat or poultry during the preparation process.

Whereas the data measured by such a sensor probe can be used by the operator of the cooking device to adjust settings of the cooking device, in more sophisticated cooking devices, the data may be used directly by the hob to automatically adjust settings of a cooking zone to which the measured data apply.

One such cooking system is described in WO 2012/159865 A1 which discloses a cooking hob in which a receiving antenna is provided underneath the glass surface of a cooking region, which antenna is provided to receive data transmitted from a temperature probe that is integrated into or is attached to a cooking pot. As can be seen from the various variants disclosed in WO 2012/159865 A1 for the placement of the probe and of the receiving antenna, a problem encountered in the cooking system described here is that in order to provide for a reliable signal transmission between probe and hob, there should be no obstacles between the sensor probe and the receiver, which in a hob having several cooking zones in which there can be arranged plural cooking utensils of various shapes and sizes is difficult to implement.

In view of the above problems in the known cooking systems, it is an object of the present invention to provide a system of the afore-mentioned type, which provides for a reliable signal transmission between a sensor means and the cooking appliance. According to another object of the present invention, a cooker hood is provided, which is designed to support said reliable signal transmission.

According to a first aspect of the invention, the object is solved by a system according to the combination of features of claim 1.

A system for recording a physical property of an item to be cooked or of a cooking process auxiliary means during a cooking process, which is performed by a cooking appliance, comprises a sensor means for sensing the physical property of the item to be cooked or of the cooking process auxiliary means as well as first and second transmission means and first and second receiving means. The first transmission means is adapted for wirelessly transmitting a status signal freely through space, specifically exclusively freely through space, which status signal corresponds to the physical property of the item to be cooked or of the cooking process auxiliary means. The first transmission means is connected, in particular electrically connected, to the sensor means. The first receiving means is adapted for receiving the status signal transmitted by the first transmission means. The first receiving means is arranged in a separate unit, which is independent from and/or arranged separate from the cooking appliance. The second transmission means is electrically connected to the first receiving means and is configured to forward the status signal transmitted by the first transmission means to the first receiving means or to transmit a processed signal generated by processing the status signal. The second transmission means is arranged in or at the separate unit. Finally, the second receiving means is adapted for receiving the processed signal or the status signal transmitted by the second transmission means and is arranged in or at the cooking appliance and electrically connected to the cooking appliance, in particular to a control unit of the cooking appliance.

The cooking appliance is particularly a cooking hob, specifically an induction cooking hob. Naturally, the system may include other types of cooking hobs, for example electric radiant hobs or gas hobs.

The cooking process auxiliary means may be any type of cookware, for example a pot or a pan. Additionally or alternatively, the cooking process auxiliary means may be a cooking aid like a cooking fluid.

The processed signal may be a control signal for controlling, in particular directly controlling, the cooking appliance. To this end, at least one control function of the cooking appliance may be outsourced to the separate unit.

The concept suggested herein is advantageous over the known solution that by providing a separate unit specifically comprising a receiver for receiving the data signal from the sensor means and a transmitter for sending the data signal or the processed signal to the cooking appliance, which separate unit is located separate from the cooking appliance, preferably at a higher elevation than the cooking appliance, such as at a wall element behind or aside the cooking appliance or at a cooker hood located above the cooking appliance, an unimpeded data transmission path can be provided between the sensor means and the receiver at the cooking appliance. Such concept may allow placing the receiver of the cooking appliance at a location where during operation of the cooking appliance usually no cooking utensil such as cookware is placed, which may be an edge or corner region of the cooking surface, or a region where controls of the cooking appliance are placed, which region anyway has to be kept free during operation of the cooking appliance. In this manner the signals to be transmitted from the sensor means to the cooking appliance can freely travel from the means to the separate unit and from the separate unit to the receiver of the cooking appliance, which thus provides for a much more reliable data transmission than in prior art systems.

Preferred embodiments of the system according to the present invention are defined in the claims dependent from claim 1.

The sensor means can comprise one or more sensors selected from the group consisting of temperature sensors, humidity sensors, impedance sensors, density sensors, pressure sensors, or any other type of sensor that may be used of advantage in a cooking environment. Furthermore, the sensor means can comprise different types of sensors, i.e. combinations of the afore-mentioned sensor types. In a preferred embodiment, the sensor means comprises a temperature sensor. By transmitting the temperature reading to the control of the cooking appliance, the power level of the respective cooking area, in particular a cooking zone of the cooking hob, in which the temperature reading is done thus can be automatically adapted to provide for a constant predetermined temperature, rather than for a constant power level.

The second transmission means and the second receiving means may be wirelessly coupled. Preferably, the second transmission and receiving means are arranged and/or configured to transmit the status signal or the processed signal over a wireless transmission path and at least partially freely through space.

A particularly preferred embodiment of the sensor means comprises a temperature sensor and/or a piezoelectric surface acoustic wave (SAW) sensor, which allows implementing the sensor as a passive sensor unit. In such an embodiment the sensor means can be designed as a piezoelectric element, which, when triggered by a radio-frequency (RF) interrogation signal, emits a Surface Acoustic Wave (SAW) from which due to the temperature coefficient of the speed of sound, the temperature of the sensor means can be determined. Whereas the sensor means can be a passive unit, such as an SAW sensor, the sensor means also can be designed as a battery operated device, for example in case that the sensor means comprises a display for signaling a measured parameter.

While in such embodiments the receiver of the separate unit, i. e. the first receiving means, is configured for receiving the surface acoustic wave emitted from the sensor means, the transmitter of the separate unit, i. e. the second transmission means, can be designed as an infrared transmitter, in which case the receiver at the cooking appliance, i. e. the second receiving means, will correspondingly be designed as an infrared receiver.

In order to further improve the signal strength, the separate unit can comprise an amplifier for amplifying signals received from the sensor means.

The cooking appliance can comprise a controller that is configured to set operation parameters of the cooking area in dependency of signals receiver from the sensor means. Thus, for example if the parameter measured is temperature, the cooking appliance can be operated to adapt the power level of the respective cooking area so as to provide for a constant temperature in the cooking area or to maintain a certain temperature in the cooking area for a certain predetermined duration.

According to embodiments, the first receiving means comprises a signal reader. Said signal reader particularly includes a reader antenna or is coupled or connected to a reader antenna.

In order to provide for an unimpeded data transmission between the transmitter of the separate unit and the receiver of the cooking appliance, the receiver at the cooking appliance is preferably located in a region where during operation of the cooking appliance usually no cooking utensils are placed, such as in a peripheral region of a cooking surface, such as in a border region or an edge region.

A further appropriate location for the receiver at the cooking appliance, i. e. the second receiving means, is the control region of the cooking appliance, in which controls for setting operation parameters are located, and which region hence usually is kept free, or has to be kept free, during operation of the cooking appliance.

The separate unit can be a transceiver comprising the receiver for receiving sensor data from the sensor means, and the transmitter for transmission of sensor data to the receiver of the cooking appliance. Thus, the separate unit can be a combined unit, in which the receiver and the transmitter are provided with common circuitry and/or share a common housing.

In preferred embodiments, the separate unit is configured as a stand-alone unit which has a power supply, such as a mains supply or a battery, and which further may have a housing with mounting means for mounting the separate unit at an elevated position with respect to the cooking appliance. Suitable mounting means may comprise, for example, a hook-and-loop fastener, an adhesive strip, or one or more lugs for screws for attaching the mounting means at a wall or a kitchen cabinet behind, aside or above the cooking appliance.

Another preferred embodiment the system further comprises a cooker hood, which is located above the cooking appliance, wherein the separate unit is integrated into the cooker hood. That is, whereas in embodiments in which the separate unit is a standalone unit, which thus also could be mounted to a cooker hood, such as when using the system suggested herein with an already existing cooker hood, in such preferred embodiment the separate unit is integrated into the cooker hood, i.e. is built into the cooker hood, which allows operating the components of the separate unit by the power supply of the cooker hood. Particularly in such latter embodiment, the system further can be adapted for a hob-to-hood communication, in which the cooker hood is configured to receive control commands from the cooking hob, such as to automatically adapt the operation of the cooker hood when changes are made in the control of cooking zones of cooking hob.

The present invention is of particular advantage in cooking hobs, in which basically the entire surface of the cooking surface may be in use during operation of the cooking hob, such as in a cooking hob which comprises an induction heating element, and particularly an induction cooking hob comprising a plurality of heating elements, which can arbitrarily combined so as to adapt the size and shape of a cooking zone to be operated to that of a cooking utensil to be heated in such cooking zone.

According to a second aspect of the invention, the object is solved by a cooker hood according to the combination of features of claim 10.

A cooker hood for extracting cooking vapours from a cooking area comprises a first transmission means and/or a first receiving means and a second transmission means and/or a second receiving means. The first transmission means and/or first receiving means is or are configured to communicate, preferably configured to wirelessly communicate, with a sensor means for sensing the physical property of an item to be cooked by a cooking appliance or of a cooking process auxiliary means. The second transmission means and/or second receiving means is or are configured to communicate, preferably configured to wirelessly communicate, with the cooking appliance.

The cooking appliance is for example a cooking hob. The communication between the cooking appliance and the second transmission means and/or second receiving means is particularly a direct communication. Alternatively, the communication may be performed through an intermediate device or means, for example a computer means, a server, a router, a smart device, a digital assistant or the Internet.

The cooker hood according to the second aspect of the present invention may be implemented or comprised in the system according to any one of the afore-described embodiments.

The first transmission means may be adapted for wirelessly transmitting a status signal freely through space, specifically exclusively freely through space, which status signal corresponds to the physical property of an item to be cooked or of a cooking process auxiliary means. Additionally or alternatively, the second transmission means may be adapted for wirelessly forwarding the status signal or a processed signal generated by processing the status signal at least partially freely through space.

According to preferred embodiments, the communication between the first transmission means and/or the first receiving means on the one hand and the sensor means on the other hand is based on Bluetooth, RFID or surface acoustic wave (SAW) technology or on free-space optical data transmission, e. g. infrared data transmission. In addition or as an alternative, the communication between the second transmission means and/or the second receiving means on the one hand and the cooking appliance on the other hand may be based on Bluetooth, WLAN or ZigBee technology or on free-space optical data transmission, e. g. infrared data transmission.

The first receiving means may comprise a signal reader, in particular a signal reader operating in collaboration with an SAW sensor means. Said signal reader particularly includes or is coupled with a reader antenna.

More specifically, the sensor means is a temperature probe, in particular an SAW temperature probe, for measuring the temperature of the item to be cooked or of a cooking process auxiliary means positioned in or on the cooking appliance, for example on the cooking hob. The measured temperature is preferably wirelessly transmittable to the first receiving means, more specifically to the signal reader for surface acoustic waves.

Moreover, the status signal, which corresponds to the physical property of the item to be cooked or of the cooking process auxiliary means, which status signal is received from the sensor means or a processed signal generated by processing the status signal is transmittable to a control unit of the cooking appliance, for example of the cooking hob. The status signal is in particular the temperature signal received from the temperature probe.

One preferred embodiment of the present invention provides a cooking appliance, which is configured to use the physical property for controlling and/or modifying a power level or a cooking program for the item to be cooked. The same embodiment or another one is characterized by a display means, which is provided for displaying the physical property, for example the temperature of the item to be cooked or of the cooking process auxiliary means.

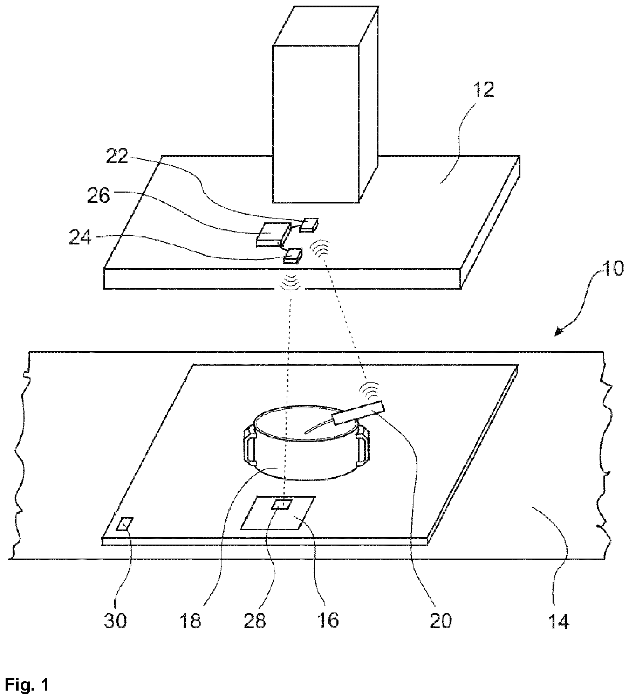

A preferred embodiment of the invention is described below by reference to the drawing which illustrates a schematic view of a cooking system made in accordance with a preferred embodiment of the present invention.

The cooking system shown in the single figure comprises a hob 10 and a hood 12 located above hob 10. Hob 10 comprises a glass-ceramic cooking surface 14 having a control region 16 in which touch sensitive control elements are provided underneath the cooking surface 14.

In the embodiment shown, hob 10 is an induction hob which does not have specific cooking zones, but in which a plurality of induction coils are arranged underneath the cooking surface 14, wherein the user may locate a cooking utensil such as a pot 18 anywhere on cooking surface 14. In such embodiment the position, shape and size of the cooking utensil can be determined by evaluating the magnetic coupling between the induction coils and the contents of the cooking utensil to be heated.

A sensor probe 20, such as a temperature probe which may comprise a surface acoustic wave (SAW) sensor, is placed within pot 18 to measure the temperature within pot 18, such as the core temperature of a piece of meat within pot 18, or of water contained within pot 18, etc. Sensor probe 20 is designed for a wireless transmission of the determined food parameter to a receiver 22 provided at the bottom side of hood 12. At the bottom side of hood 12 a transmitter 24 is arranged, which may be configured as an infrared (IR) transmitter. Optionally within hood 12 signal processing means can be provided, such as an amplifier 26, for processing and/or amplifying the signal before sending it via transmitter 24 to the hob 12.

Hob 12 comprises a receiver 28 which as shown in the figure may be located within the control region 16 of the hob for receiving the signal transmitted from the hood. The receiver for receiving the sensor signal also could be provided in an edge region, such as in a corner of the cooking surface, as is shown for a receiver 30 illustrated in the figure.

In the cooking system described herein measuring data obtained by the sensor probe can be transmitted to the hob, wherein due to the data being sent via the hood, the signal strength and hence the reliability of the data received at the hob can be significantly improved in comparison to known systems because the signal can be transmitted from the sensor probe to the hood and from the hood to the hob without being impeded by cooking utensils present on the cooking surface which else could disturb or even preclude the data transmission. Moreover, the signals are wirelessly transmitted over free space to a great extent and specifically there is no need for the signal from the sensor probe 20 to the receiver 22 at the hood 12 to pass through material, e. g. solid objects, so that signal weakening is avoided.

### List of reference signs

- 10: hob
- 12: hood
- 14: cooking surface
- 16: control region
- 18: cooking utensil
- 20: sensor probe
- 22: receiver at hood
- 24: transmitter at hood
- 26: amplifier
- 28: receiver at hob
- 30: receiver at hob

## Claims

1. A system for recording a physical property of an item to be cooked or of a cooking process auxiliary means during a cooking process performed by a cooking appliance (10), for example by a cooking hob, more particularly by an induction cooking hob, the system comprising
- a sensor means (20) for sensing the physical property of the item to be cooked or of the cooking process auxiliary means,
- a first transmission means for wirelessly transmitting a status signal freely through space, which status signal corresponds to the physical property of the item to be cooked or of the cooking process auxiliary means, wherein the first transmission means is connected, in particular electrically connected, to the sensor means (20),
- a first receiving means (22) for receiving the status signal transmitted by the first transmission means, the first receiving means being arranged in a separate unit (12), which is independent from, particularly arranged separate from, the cooking appliance (10),
- a second transmission means (24) electrically connected to the first receiving means (22), the second transmission means (24) being configured to forward the status signal transmitted by the first transmission means or to transmit a processed signal generated by processing the status signal, wherein the second transmission means (24) is arranged in or at the separate unit (12), and
- a second receiving means (28, 30) for receiving the processed signal or the status signal transmitted by the second transmission means (24), the second receiving means (28, 30) being arranged in or at the cooking appliance (10) and electrically connected to the cooking appliance (10), in particular to a control unit of the cooking appliance (10).

2. The system of claim 1, wherein the second transmission means (24) and the second receiving means (28, 30) are wirelessly coupled and preferably arranged and/or configured to wirelessly transmit the processed signal or the status signal at least partially freely through space.

3. The system of claim 1 or 2, wherein the sensor means (20)
- comprises a temperature sensor and/or a surface acoustic wave (SAW) sensor,
and/or
- is a battery operated device or a passive unit.

4. The system of any one of the preceding claims, wherein the second transmission means (24) is an infrared transmitter and the second receiving means (28, 30) is an infrared receiver.

5. The system of any one of the preceding claims, wherein the separate unit (12) comprises an amplifier (26) for amplifying signals received from the sensor means (20).

6. The system of any one of the preceding claims, wherein the first receiving means (22) comprises a signal reader, which particularly includes or is coupled with a reader antenna.

7. The system of any one of the preceding claims, wherein the separate unit (12) is a stand-alone unit having a power supply.

8. The system of claim 7, wherein the separate unit (12) comprises a housing with mounting means for its mounting at an elevated position with respect to the cooking appliance (10) .

9. The system of any one of claims 1 to 6, further comprising a cooker hood (12) located above the cooking appliance (10), wherein the separate unit corresponds to or is integrated into the cooker hood (12).

10. A cooker hood (12) for extracting cooking vapours from a cooking area, in particular a cooker hood (12) implemented in the system according to any one of the preceding claims, the cooker hood (12) comprising
- a first transmission means and/or a first receiving means (22) configured to communicate, preferably configured to wirelessly communicate, with a sensor means (20) for sensing the physical property of an item to be cooked by a cooking appliance (10) or of a cooking process auxiliary means,
and
- a second transmission means (24) and/or a second receiving means configured to communicate, preferably configured to wirelessly communicate, with the cooking appliance (10), for example with the cooking hob, in particular to communicate directly or through an intermediate device or means, for example a computer means, a server, a router, a smart device, a digital assistant or the Internet.

11. The cooker hood (12) of claim 10, wherein the communication
- between the first transmission means and/or first receiving means (22) and the sensor means (20) is based on Bluetooth, RFID or surface acoustic wave (SAW) technology or on free-space optical data transmission, e. g. infrared data transmission
and/or
- between the second transmission means (24) and/or second receiving means and the cooking appliance (10) is based on Bluetooth, WLAN or ZigBee technology or on free-space optical data transmission, e. g. infrared data transmission.

12. The cooker hood (12) of claim 10 or 11, wherein the first receiving means (22) comprises a signal reader, which particularly includes or is coupled with a reader antenna.

13. The cooker hood (12) of any one of the claims 10 to 12, wherein the sensor means (20) is a temperature probe, in particular an SAW temperature probe, for measuring the temperature of the item to be cooked or of the cooking process auxiliary means positioned in or on the cooking appliance (10), for example on the cooking hob, wherein the measured temperature is preferably wirelessly transmittable to the first receiving means (22), particularly to the signal reader for surface acoustic waves.

14. The cooker hood (12) of any one of the claims 10 to 13, wherein the status signal, which corresponds to the physical property of the item to be cooked or of the cooking process auxiliary means received from the sensor means (20), in particular the temperature signal received from the temperature probe, or a processed signal generated by processing the status signal is transmittable to a control unit of the cooking appliance (10), for example of the cooking hob.

15. The cooker hood (12) of any one of the claims 10 to 14, wherein the cooking appliance (10) is configured to use the physical property for controlling and/or modifying a power level or a cooking program for the item to be cooked and/or wherein display means are provided for displaying the physical property, for example the temperature of the item to be cooked or of the cooking process auxiliary means.
